# EUROPEAN PATENT APPLICATION

(11) **EP 4 759 491 A1**
(43) Date of publication of application: **17.06.2026**
(21) Application number: 23948566.7
(22) Date of filing: 08.08.2023
(51) Int. Cl.: B25J 11/00, B25J 5/00, B25J 9/00, B25J 9/16, B25J 13/08, B25J 19/02, B62B 5/00

(54) **LOGISTICS ROBOT AND TRANSPORTATION MEANS**

(71) Applicant: Bear Robotics Korea, Inc., Seoul 04779 (KR)
(72) Inventor: SHIN, Seongmin, Seoul 06772 (KR); CHEONG, Yoonhyouk, Seoul 06772 (KR); LEE, Jonghyun, Seoul 06772 (KR)
(74) Representative: Murgitroyd & Company
(86) International application number: PCT/KR2023/011673
(87) International publication number: WO 2025/033571

(57) **Abstract**

Provided is a logistics robot connected to a rolltainer including a metal part and a coupling block on the front side and towing the rolltainer, the robot comprising: a body; a driving unit disposed on a lower side of the body; and a docking unit disposed on the body and coupled to the metal part and the coupling block of the rolltainer, wherein the docking unit includes: an electromagnet disposed on the body, the magnetism of which changes depending on whether power is applied, and to which the metal part is selectively attached depending on the change in magnetism; and a docking bracket disposed on the body adjacent to the electromagnet and into which the coupling block is inserted, wherein the docking bracket includes: a pair of side wall portions covering the left and right sides of the coupling block; and an upper surface portion covering the upper portion of the coupling block.

## Description

### [Technical Field]

The present disclosure relates to a logistics robot and a transport means for transporting one or more articles to a destination.

### [Background]

To take charge of a portion of factory automation, robots have been developed for industrial use. Recently, the application range of robots has been further expanded, and robots that can be used in daily life as well as medical robots and aerospace robots are being developed.

Among industrial robots, robots that perform precise assembly work repeatedly perform the same operations and repeat the operations without encountering unexpected situations at a predetermined position, so that automation using the robots has been proceeded.

However, a transportation area including a traveling area (i.e., a driving area) where occurrence or non-occurrence of unexpected situations can be determined, has not yet been actively commercialized with robots. However, recently, as performance of sensors that recognize the surroundings has improved and computer technology that can quickly process the recognized information has evolved, the number of driving robots has rapidly increased.

Industrially, robots that are in charge of transportation functions have attracted attention and competition in robot technology is intensifying day by day. When a large amount of articles are moved, it takes a lot of time to load and unload the articles. Thus, it is more efficient for the logistics robot to transport the rolltainer carrying the articles thereon rather than to load the article on the logistics robot itself.

In this case, the coupling of the logistics robot and the rolltainer should be stable so that the rolltainer and the logistics robot are not separated from each other when moving on an inclined surface or uneven surface. Thus, there is a need for a stable engaging structure therebetween. In addition, manpower should be put in when manually performing the engaging between the rolltainer and the logistics robot. For this reason, there is a need to automate the engaging and disengaging between the rolltainer and the logistics robot.

### [Summary]

### [Technical Purpose]

The present disclosure relates to a logistics robot moving while towing a cart. A purpose of the present disclosure is to provide a logistics robot and a transportation means configured to detect a location of the cart to calculate a driving route and move along the driving route.

### [Technical Solution]

Provided is a logistics robot engaged with a rolltainer to tow the rolltainer, wherein the rolltainer may include a metal portion and a coupling block at a front surface thereof, wherein the logistics robot comprises: a body; a traveling unit disposed under the body; and a docking unit disposed on the body and engaged with the metal portion and the coupling block of the rolltainer, wherein the docking unit may include: an electromagnet having magnetism varying depending on whether power may be applied thereto, wherein the metal portion may be selectively attached to the electromagnet based on the varying magnetism; and a docking bracket disposed adjacent to the electromagnet, wherein the coupling block may be inserted into the docking bracket, wherein the docking bracket includes a pair of sidewall portions respectively covering left and right sides of the coupling block and an upper surface portion covering an upper portion of the coupling block.

The electromagnet may include a permanent electromagnet including a magnetic coil and a permanent magnet, wherein in response to that power is applied to the magnetic coil, a magnetic field in a direction opposite to a direction of a magnetic field of the permanent magnet may be generated, so that a total magnetic force of the permanent electromagnet including may be reduced.

The logistics robot may further comprise a controller configured to apply the power to the magnetic coil such that the docking unit may be disengaged from the rolltainer.

The electromagnet may face a rear surface of the body and may include a pair of right and left electromagnets arranged in a horizontal direction of the docking bracket.

The logistics robot may further comprise: a vertical bracket protruding upwards from the body; a rear camera disposed on the vertical bracket and facing in a rearward direction, wherein the rear camera may be configured to recognize an identification code disposed on the rolltainer; and a controller configured to control the traveling unit such that the coupling block may be inserted into the docking bracket, based on a position of the identification code recognized by the rear camera.

In response to that the position of the identification code is located within a specified distance from the robot, the controller may be configured to control the power application to the electromagnet to remove the magnetic force of the electromagnet.

The logistics robot may further comprise an engagement sensor configured to detect whether the coupling block of the rolltainer is inserted into the docking bracket, wherein in response to that the engagement sensor is turned on, the controller may be configured to control the power application to the electromagnet to restore the magnetic force of the electromagnet.

The docking unit may include a guide bracket having left and right portions respectively disposed on left and right sides of a guide protrusion protruding downwardly from the coupling block, wherein a spacing between the left and right portions may be increased as the guide bracket extends in a rearward direction.

A vertical level of the guide bracket may be lower than a vertical level of the coupling block.

A front portion of the guide bracket may include a straight portion disposed under the docking bracket, wherein the logistics robot may further comprise an engagement sensor for detecting whether the guide protrusion may be received in a groove defined in the straight portion.

The coupling block may include: a first block having a rear side coupled to the rolltainer; a second block disposed under the first block; and a connection portion connecting the first block and the second block to each other, wherein the sidewall portions of the docking bracket may be respectively disposed on both opposing sides of the second block, wherein the upper surface portion of the docking bracket may have an opening defined therethrough at a position corresponding to a position of the connection portion.

The docking unit may include a guide bracket having two portions respectively extending rearwardly from the pair of sidewall portions of the docking bracket, wherein a spacing between the two portions may be increased as the guide bracket extends in a rearward direction.

In accordance with another aspect of the present disclosure, provided is a transportation means comprising: a rolltainer including a metal portion and a coupling block disposed at a front surface thereof; and a logistics robot including a body, a traveling unit disposed under the body, and a docking unit disposed on the body and engaged with the metal portion and the coupling block, wherein the docking unit may include: an electromagnet having magnetism varying depending on whether power may be applied thereto, wherein the metal portion may be selectively attached to the electromagnet based on the varying magnetism; and a docking bracket, wherein the coupling block may be inserted into the docking bracket, wherein the docking bracket includes a pair of sidewall portions respectively covering left and right sides of the coupling block and an upper surface portion covering an upper portion of the coupling block.

The electromagnet may include a permanent electromagnet including a magnetic coil and a permanent magnet, wherein in response to that power is applied to the magnetic coil, a magnetic field in a direction opposite to a direction of a magnetic field of the permanent magnet may be generated, so that a total magnetic force of the permanent electromagnet including may be reduced, wherein the logistics robot may further comprise a controller configured to apply the power to the magnetic coil such that the docking unit may be disengaged from the rolltainer.

The logistics robot may further comprise: a vertical bracket protruding upwards from the body; a rear camera disposed on the vertical bracket and facing in a rearward direction, wherein the rear camera may be configured to recognize an identification code disposed on the rolltainer; and a controller configured to control the traveling unit such that the coupling block may be inserted into the docking bracket, based on a position of the identification code recognized by the rear camera.

In response to that the position of the identification code is located within a specified distance from the robot, the controller may be configured to apply the power to the electromagnet to remove the magnetic force of the electromagnet, wherein in response to that the coupling block of the rolltainer has been inserted into the docking bracket, the controller may be configured to stop the power application to the electromagnet to restore the magnetic force of the electromagnet.

The coupling block may include a guide protrusion fixed to a front surface of the metal portion and protruding downwards from the coupling block, wherein the metal portion may have an opening defined therethrough and disposed under the coupling block, wherein the ponding has a predetermined width, wherein the docking unit may include a guide bracket having left and right portions respectively disposed on left and right sides of the guide protrusion, wherein a spacing between the left and right portions may be increased as the guide bracket extends in a rearward direction, wherein when the coupling block and the docking bracket are engaged with each other, the guide bracket passes through the opening.

The coupling block may include: a first block having a rear side coupled to the rolltainer; a second block disposed under the first block; and a connection portion connecting the first block and the second block to each other, wherein the sidewall portions of the docking bracket may be respectively disposed on both opposing sides of the second block, wherein the upper surface portion of the docking bracket may have an opening defined therethrough at a position corresponding to a position of the connection portion, wherein the docking unit may include a guide bracket having two portions respectively extending rearwardly from the pair of sidewall portions of the docking bracket, wherein a spacing between the two portions may be increased as the guide bracket extends in a rearward direction.

The rolltainer may include: a lowest loading shelf, wherein the coupling block and the metal portion are disposed on a front surface of the lowest loading shelf; and a cart stopper disposed on a bottom surface of the lowest loading shelf, wherein the docking bracket may be disposed on a front area of an upper surface of the body, wherein a portion of the body may be received in a space under the lowest loading shelf when the coupling block has been inserted into the docking bracket, wherein the cart stopper may be in contact with the upper surface of the body when the coupling block has been inserted into the docking bracket.

The cart stopper may include an elastic portion surrounding a support frame disposed on the bottom surface of the lowest loading shelf.

### [Advantageous Effects]

The docking unit of the logistics robot according to the present disclosure may be engaged with the coupling unit of the rolltainer at an accurate position, such that the robot may be automatically connected to the rolltainer without manual work.

In addition, the permanent electromagnet may lose the magnetic force when the power is applied thereto. Thus, only in order that the docking unit of the robot is disengaged from the coupling unit 530 of the rolltainer, the logistics robot of the present disclosure may apply the power to the permanent electromagnet, such that the power consumption is reduced and the detachment of the robot from the rolltainer is easy.

In addition, the docking bracket may limit the horizontal and vertical movements of the coupling unit of the rolltainer to prevent shaking, slippage, and the like while the transportation mean is driving.

In addition, the slippage prevention means may prevent the phenomenon in which the rolltainer slips due to inertia when the transportation mean is traveling on the inclined road or the protrusion or when the logistics robot is accelerated or decelerated.

Effects obtainable from the present embodiments are not limited by the above mentioned effects, and other unmentioned effects can be clearly understood from the above description by those having ordinary skill in the technical field to which the present disclosure pertains.

### [Brief Description of Drawings]

FIG. 1 is a diagram illustrating a cloud system based on a 5G network according to an embodiment of the present disclosure.
FIG. 2 is a block diagram illustrating appearance of a logistics robot according to an embodiment of the present disclosure.
FIG. 3 is a diagram illustrating a robot control system according to an embodiment of the present disclosure.
FIGS. 4 and 5 are perspective views of a logistics robot and a rolltainer according to an embodiment of the present disclosure.
FIG. 5 is a diagram illustrating a state in which a logistics robot is engaged with a rolltainer in a transportation means according to an embodiment of the present disclosure.
FIG. 6 is a diagram illustrating a state in which a logistics robot is engaged with a rolltainer in a transportation means according to an embodiment of the present disclosure.
FIG. 7 is an enlarged view of a portion A of FIG. 6.
FIG. 8 is a top perspective view of a state in which the logistics robot of FIG. 7 is engaged with the rolltainer.
FIG. 9 is a side elevation view of a transportation means according to an embodiment of the present disclosure.
FIGS. 10 and 11 are diagrams illustrating a process in which a logistics robot is engaged with a rolltainer in a transportation means according to another embodiment of the present disclosure.
FIG. 12 is a perspective view illustrating a state in which a logistics robot is engaged with a rolltainer in a transportation means according to another embodiment of the present disclosure.
FIG. 13 is a cross-sectional view of B-B of FIG. 12.
FIGS. 14 and 15 are diagrams showing an engaging structure of a transportation means according to another embodiment of the present disclosure.

### [Best Mode]

A Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element may be directly connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

A robot is a machine device capable of automatically performing a certain task or operation. The robot may be controlled by an external control device or may be embedded in the control device. The robot may perform tasks that are difficult for humans to perform, such as repeatedly processing only a preset operation, lifting a heavy object, performing precise tasks or a hard task in extreme environments.

In order to perform such tasks, the robot includes a driver such as an actuator or a motor, so that the robot may perform various physical operations, such as moving a robot joint.

Industrial robots or medical robots having a specialized appearance for specific tasks due to problems such as high manufacturing costs and dexterity of robot manipulation were the first to be developed.

Whereas industrial and medical robots are configured to repeatedly perform the same operation in a designated place, mobile robots have recently been developed and introduced to the market. Robots for use in the aerospace industry may perform exploration tasks or the like on distant planets that are difficult for humans to directly go to, and such robots have a driving function.

In order to perform the driving function, the robot has a driver, wheel(s), a frame, a brake, a caster, a motor, etc. In order for the robot to recognize the presence or absence of surrounding obstacles and move while avoiding the surrounding obstacles, an evolved robot equipped with artificial intelligence has recently been developed.

Artificial intelligence refers to a technical field for researching artificial intelligence or a methodology for implementing the artificial intelligence. Machine learning refers to a technical field for defining various problems handled in the artificial intelligence field and for researching methodologies required for addressing such problems. Machine learning is also defined as an algorithm that improves performance of a certain task through continuous experience.

An artificial neural network (ANN) is a model used in machine learning, and may refer to an overall model having problem solving ability, which is composed of artificial neurons (nodes) that form a network by a combination of synapses. The artificial neural network (ANN) may be defined by a connection pattern between neurons of different layers, a learning process of updating model parameters, and an activation function of generating an output value.

The artificial neural network (ANN) may include an input layer and an output layer, and may optionally include one or more hidden layers. Each layer includes one or more neurons, and the artificial neural network (ANN) may include a synapse that interconnects neurons and other neurons.

In the artificial neural network (ANN), each neuron may output a function value of an activation function with respect to input signals received through synapses, weights, and deflection.

A model parameter may refer to a parameter determined through learning, and may include the weight for synapse connection and the deflection of neurons. In addition, the hyperparameter refers to a parameter that should be set before learning in a machine learning algorithm, and includes a learning rate, the number of repetitions, a mini-batch size, an initialization function, and the like.

The purpose of training the artificial neural network (ANN) may be seen as determining model parameters that minimize a loss function according to the purpose of the robot or the field of use of the robot. The loss function may be used as an index for determining an optimal model parameter in a learning process of the artificial neural network (ANN).

Machine learning may be classified into supervised learning, unsupervised learning, and reinforcement learning according to learning methods.

Supervised learning refers to a method for training the artificial neural network (ANN) in a state where a label for learned data is given. In this regard, the label may refer to a correct answer (or a resultant value) that should be inferred by the artificial neural network (ANN) when the learned data is input to the artificial neural network (ANN). Unsupervised learning may refer to a method for training the artificial neural network (ANN) in a state where a label for learned data is not given. Reinforcement learning may refer to a learning method in which an agent defined in the certain environment learns to select an action or sequence of actions that may maximize cumulative compensation in each state.

Among artificial neural networks, machine learning implemented as a deep neural network (DNN) including a plurality of hidden layers is also referred to as deep learning, and deep learning is a part of machine learning. Hereinafter, machine learning is used in a sense including deep learning.

Artificial intelligence (AI) technology is applied to the robot, so that the robot may be implemented as a guide robot, a transportation robot, a cleaning robot, a wearable robot, an entertainment robot, a pet robot, and an unmanned aerial robot, etc.

The robot may include a robot control module for controlling operation thereof, and the robot control module may refer to a software module or a chip implemented in hardware.

By means of sensor information obtained from various types of sensors, the robot may acquire state information of the robot, may detect (recognize) the surrounding environment and the object, may generate map data, may determine a travel route and a travel plan, may determine a response to user interaction, or may determine a necessary operation.

The robot may perform the above-described operations using a learning model composed of at least one artificial neural network (ANN). For example, the robot may recognize the surrounding environment and object using a learning model, and may determine a necessary operation using the recognized surrounding environment information or object information. In this regard, the learning model may be directly learned from the robot or learned from an external device such as an AI server.

In this case, whereas the robot may perform a necessary operation by directly generating a result using the learning model, the robot may also perform an operation by transmitting sensor information to an external device such as an AI server and receiving the resultant information generated thereby.

The robot may perform autonomous driving through artificial intelligence. Autonomous driving refers to a technique in which a movable object such as a robot may autonomously determine an optimal path by itself and may move while avoiding collision with an obstacle. The autonomous driving technique currently being applied may include a technique in which the movable object (e.g., a robot) may travel while maintaining a current driving lane, a technique in which the movable object may travel while automatically adjusting a driving speed such as adaptive cruise control, a technique in which the movable object may automatically travel along a predetermined route, and a driving technique in which, after a destination is decided, a route to the destination is automatically set.

In order to perform autonomous driving, the movable object such as the robot may include a large number of sensors to recognize data of the surrounding situation. For example, the sensors may include a proximity sensor, an illumination sensor, an acceleration sensor, a magnetic sensor, a gyro sensor, an inertial sensor, an RGB sensor, an infrared (IR) sensor, a fingerprint recognition sensor, an ultrasonic sensor, an optical sensor, a microphone, a lidar, a radar, and the like.

The robot may perform autonomous driving not only based on information collected by sensors, but also based on image information collected by an RGBC camera and an infrared (IR) camera and sound information collected through a microphone. In addition, the robot may travel based on information received through a user input unit. Map data, location information, and information about peripheral situations may be collected through a wireless communication unit. The collected information is requisite for autonomous driving.

Map data may include object identification information for various objects disposed in a space where the robot moves. For example, the map data may include object identification information for fixed objects such as a wall and a door, and other object identification information for movable objects such as a flowerpot and a desk. In addition, the object identification information may include a name, a type, a distance, a location, etc.

Therefore, the robot may essentially include sensors, various input units, a wireless communication unit, and the like to collect data that may be learned by artificial intelligence, and may perform optimal operations by synthesizing various types of information. The training processor for performing artificial intelligence may perform learning by being mounted in a controller embedded in the robot, may transmit the collected information to a server, may perform learning through the server, and may retransmit the learned result to the robot, so that the robot may perform autonomous driving based on the learned result.

A robot equipped with artificial intelligence may collect the surrounding information even in a new place to implement the entire map, and a large amount of information about a place of the major activity zone may be accumulated, so that the robot may perform more accurate autonomous driving.

The robot may include a touchscreen or a button to receive a user input, and may receive a command by recognizing a user's voice. In order to convert a voice input signal into a character string, the processor may obtain information about the intention corresponding to the user input using at least one of a speech to text (STT) engine for converting a voice input into a character string and a natural language processing (NLP) engine for obtaining information about the intention of natural language.

In this case, at least one of the STT engine and the NLP engine may include an artificial neural network (ANN) trained by a machine learning algorithm. In addition, at least one of the STT engine and the NLP engine may be trained by the training processor, may be trained by the training processor of the AI server, or may be trained by distributed processing of the trained results.

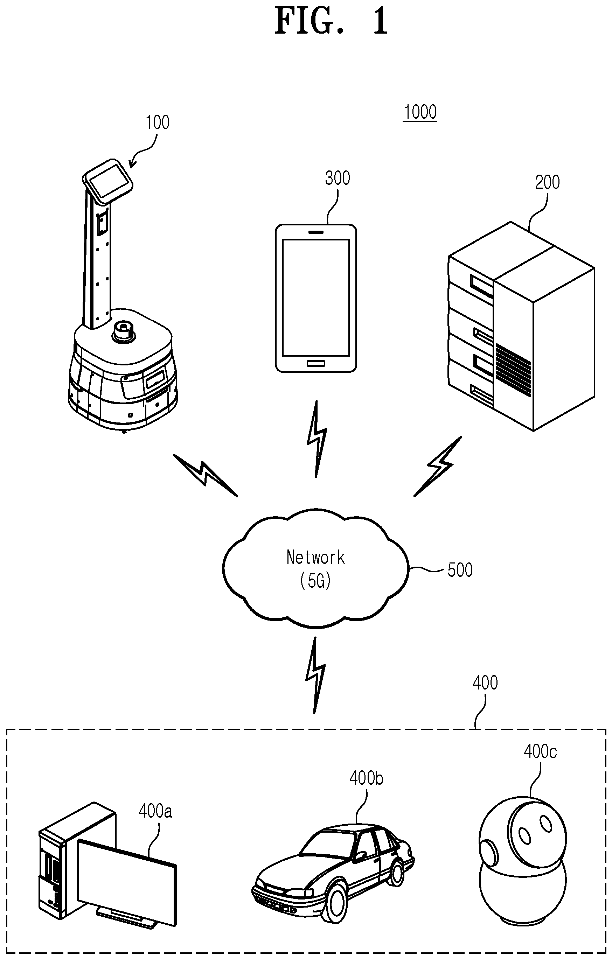

FIG. 1 is a diagram illustrating a cloud system 1000 based on a 5G network according to an embodiment of the present disclosure.

Referring to FIG. 1, the cloud system 1000 may include a logistics robot 100, a mobile terminal 300, a robot control system 200, various devices 400, and a 5G network 500.

The logistics robot 100 is a robot that transports article (articles) from a departure point to a destination. The logistics robot 100 can move directly from a logistics center to a destination. Alternatively, after the logistics robot is loaded on a vehicle at the logistics center and is then delivered to the vicinity of the destination by the vehicle, the logistics robot is unloaded from the vehicle and then moves to the destination.

In addition, the logistics robot 100 may move articles to the destination not only outdoors but also indoors. The logistics robot 100 can be implemented as an AGV, and the AGV may be a transport device that moves by a sensor, a magnetic field, a vision device, etc. on the floor.

The logistics robot 100 may include a storage area for storing articles therein, the storage area may be divided into a plurality of partial storage areas to load various articles, and various types of articles may be placed in the partial storage areas. Accordingly, mixing of articles can be prevented.

The mobile terminal 300 may communicate with the logistics robot 100 via the 5G network 500. The mobile terminal 300 may be a device carried by a user who installs a partition in the storage area to load articles, or may be a device carried by a recipient of the loaded articles. The mobile terminal 300 may provide information based on images, and the mobile terminal 300 may include mobile devices such as a mobile phone, a smartphone, a wearable device (e.g., a watch-type terminal, a glass-type terminal, an HMD).

The robot control system 200 may remotely control the logistics robot 100 and respond to various requests of the logistics robot 100. For example, the robot control system 200 may perform calculations using artificial intelligence (AI) based on the request from the logistics robot 100.

In addition, the robot control system 200 may determine a movement path of the logistics robot 100. When there is a plurality of destinations, the robot control system 200 may determine the order of the destinations when there are multiple destinations.

The various devices 400 may include a personal computer (PC) 400a, an autonomous vehicle 400b, a home robot 400c, etc. When the logistics robot 100 arrives at the transport destination of the articles, the logistics robot 100 can directly deliver the articles to the home robot 400c through communication with the home robot 400c.

The various devices 400 may be connected to the logistics robot 100, the mobile terminal 300, the robot control system 200, etc., via the 5G network 500 by wire or wirelessly.

The logistics robot 100, the mobile terminal 300, the robot control system 200, and various devices 400 are all equipped with 5G modules to transmit and receive data at a rate of 100 Mbps to 20 Gbps (or higher), so that large video files can be transmitted to various devices, and power consumption can be minimized by operating at low power. However, the transfer rate may be implemented differently depending on the embodiments.

The 5G network 500 may include a 5G mobile communication network, a short-range network, the Internet, etc., and may provide a communication environment for devices by wire or wirelessly.

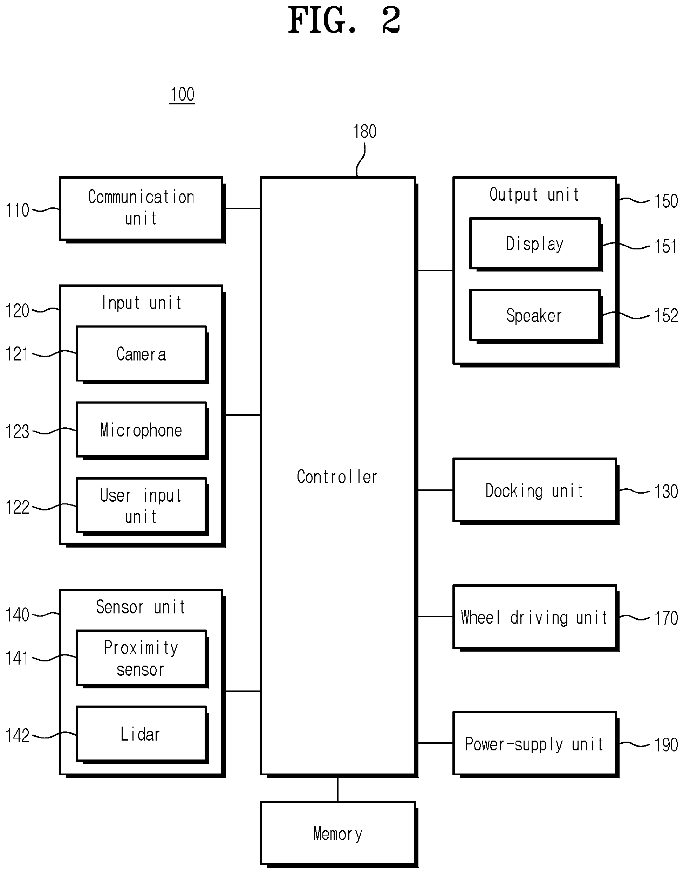

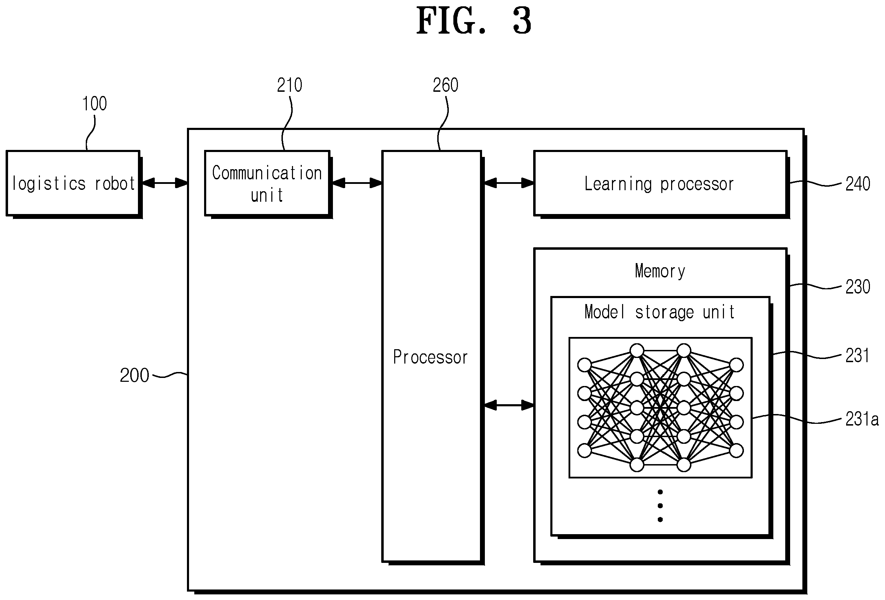

FIG. 2 is a block diagram illustrating appearance of the logistics robot 100 according to an embodiment of the present disclosure. The logistics robot 100 according to an embodiment of the present disclosure will be described with reference to FIGS. 3 to 5.

Referring to FIG. 2, the logistics robot 100 may include a body including a storage area 50, and constituent components to be described later may be included in the body. The logistics robot 100 may include a communication unit 110, an input unit 120, a sensing unit 140, an output unit 150, a memory 185, a wheel driving unit 170, a controller 180, and a power-supply unit 190. The constituent components shown in FIG. 2 are not always required to implement the logistics robot 100, such that it should be noted that the logistics robot 100 according to the present disclosure may include more or fewer components than the elements listed above.

The communication unit 110 may include a wired or wireless communication module capable of communicating with the robot control system 200.

As an optional embodiment, the communication unit 110 may be equipped with modules for GSM, CDMA, LTE, 5G, WLAN, Wi-Fi, Bluetooth, RFID, infrared communication (IrDA), ZigBee, and NFC communication.

The input unit 120 may include a user input unit 122 for receiving information from a user. As an optional embodiment, the input unit 120 may include a camera 121 for inputting an image signal, and a microphone 123 (hereinafter referred to as a "microphone") for receiving an audio signal. In this regard, the camera 121 or the microphone 123 may be treated as a sensor, and a signal acquired from the camera 121 or the microphone 123 may be referred to as sensing data or sensor information.

The input unit 120 may acquire input data to be used when acquiring output data using learning data and a learning model for model learning. The input unit 120 may obtain unprocessed input data. In this case, the controller 180 may extract input feature points as preprocessing for the input data.

The camera 121 may be located in front to detect obstacles in front thereof, and as shown in FIG. 3, a plurality of cameras 121 may be arranged to be different in angle. In more detail, the plurality of cameras 121 may have different capture directions, such as a camera for widely recognizing a front-view area and a camera for capturing a floor.

Alternatively, a camera which photographs an object in rear thereof may scan a code having specific information, such as, a barcode, or a QR code.

Alternatively, cameras with different functions may be provided. For example, a wide-angle camera, an infrared (IR) camera, etc. may be provided. The camera may serve as a sensing unit 140 for detecting surrounding objects.

The user input unit 122 may be provided with a touch panel overlapping with a button or a display 151. Alternatively, a user command may be input remotely through the communication unit 110. In this case, the user input unit 122 may include a PC 400 or a remote control device separately provided from the logistics robot 100.

Since the user input unit 122 includes all methods capable of receiving user commands, the user input unit 122 can recognize user commands through voice recognition. That is, a voice recognition device that analyzes voice collected from the microphone 123 and extracts user commands can also serve as the user input unit 122.

The input unit 120 may include a code scanner, and the code scanner may photograph a code including information on the rolltainer, size information of an article, weight information of the article, destination information of the article, information on a transport requester thereof, and the like to receive information. In this regard, an input unit of the article information may include a code reader.

The sensing unit140 may obtain at least one of internal information of the logistics robot 100, surrounding environment information of the logistics robot 100, and user information using various sensors.

At this time, the sensing unit140 may include various types of sensors for recognizing the surroundings for autonomous driving. Representative examples may include a distance detection sensor or a proximity sensor 141 and a Lidar 141.

The proximity sensor 141 may include an ultrasonic sensor that recognizes nearby objects and determines the distance to the objects based on the time taken for emitted ultrasonic waves to return. A plurality of proximity sensors may be provided along the circumference, and may also be disposed on an upper side to detect obstacles located on the upper side.

The Lidar 142 is a device that precisely expresses exterior appearances of the surroundings by emitting laser pulses and receiving the light that is reflected from the surrounding objects. The operation principle of the Lidar 142 is similar to that of a radar, but different electromagnetic waves are used in the Lidar 142 and the radar, so that the Lidar 142 and the radar are designed to use different technologies and different utilization ranges.

Lasers may damage human eyesight because they use light with a wavelength of 600 to 1000 nm. The Lidar 142 uses a longer wavelength than the lasers, and is used to measure not only the distance to a target object, but also a moving speed and direction, temperature, surrounding atmospheric material analysis, a concentration measurement, and the like.

In addition, the sensing unit140 may include an illumination sensor, an acceleration sensor, a magnetic sensor, a gyro sensor, an inertial sensor, an RGB sensor, an infrared (IR) sensor, a fingerprint recognition sensor, an ultrasonic sensor, a light sensor, an optical sensor, etc.

The output unit 150 may generate various output signals related to visual, auditory and/or tactile sensations. The output unit 150 may include an optical output unit that outputs visual information, a display 151, etc. The output unit 150 may include a speaker 152 for outputting auditory information, an ultrasonic output unit for outputting ultrasonic signals belonging to an inaudible frequency, etc., and a haptic module for outputting tactile information.

The memory 185 may store data that supports various functions of the logistics robot 100. The memory 185 may store not only a plurality of application programs (or applications) driven by the logistics robot 100, but also data and commands required to operate the logistics robot 100.

In addition, the memory 185 may store information required to perform operations using artificial intelligence, machine learning, and artificial neural networks. The memory 185 may store a deep neural network model. The deep neural network model may be used to infer a result value for new input data rather than learning data, and the inferred value may be used as a basis of determination required to perform a certain operation.

The power-supply unit 190 may receive external power or internal power under control of the controller 180, such that the power-supply unit 190 may supply the received power to the constituent components included in the logistics robot 100. The power-supply unit 190 may include, for example, a battery. The battery 191 may be implemented as an embedded battery or a replaceable battery. The battery may be charged by a wired or wireless charging method, and the wireless charging method may include a magnetic induction method or a magnetic resonance method.

The driving unit 170 is a means for moving the logistics robot 100, may include wheels or legs, and may include a wheel driving unit and a leg driving unit for controlling the wheels or legs. A plurality of wheels disposed on the bottom surface of the wheel driving unit may be controlled to move the logistics robot 100 including the body.

The wheels may include a main wheel 171 for fast driving, a caster 173 for changing the direction to another direction, and an auxiliary caster for stable driving so that the loaded articles (L) do not fall during driving.

The leg driving unit (not shown) may control multiple legs according to control of the controller 180, and may thus move the body. The plurality of legs may correspond to a configuration formed so that the logistics robot 100 can walk or run. The plurality of legs may be implemented as four legs, but the scope of the present disclosure is not limited thereto. The plurality of legs may be coupled to the body to be integrally formed, and may be implemented to be detachably coupled to the body.

The logistics robot 100 may move the body through the driving unit 170 having at least one of the wheel driving unit and/or the leg driving unit. However, in this specification, an example in which the wheel driving unit is mounted on the logistics robot 100 will be mainly described.

The controller 180 is a module that controls the configurations of the logistics robot 100. The controller 180 may refer to a data processing device embedded in hardware that has a physically structured circuit to perform a function expressed by code or commands included in a program. As an example of the data processing device embedded in hardware, this exemplary data processing device may include processing devices such as a microprocessor, a central processing unit (CPU), a processor core, a multiprocessor, an ASIC, and an FPGA, but the scope of the present disclosure is not limited thereto.

For example, the controller 180 may collect the above information through the input unit 120. The input of the input unit 120 may also include a touch input on the display.

Based on the collected information, the controller 180 may transmit information on the articles (L) loaded in the loading area 50 to the mobile terminal 200 (see FIG. 1) through the communication unit 110.

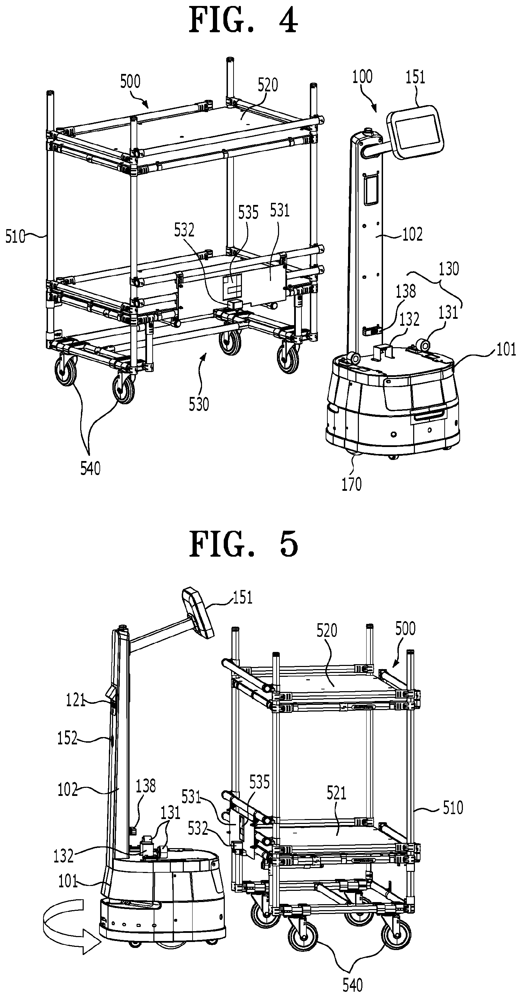

The logistics robot 100 of the present disclosure may act as a transportation means for moving the articles while towing the rolltainer 500 (see FIG. 4) and may include a docking unit 130 for coupling with the rolltainer 500. The docking unit 130 may be firmly engaged with the rolltainer 500 to maintain a stable engaged state between the robot and the rolltainer even while driving on an inclined surface or uneven surface of the driving road.

In addition, the docking unit 130 of the present disclosure and a coupling unit 530 (see FIG. 4) of the rolltainer 500 may include components to guide the coupling therebetween so that the engaging between the coupling unit 530 and the docking unit 130 is made automatically rather than manually.

Referring to FIG. 3, the robot control system 200 may include an AI server. The AI server may refer to a device that trains an artificial neural network using a machine learning algorithm or uses a trained artificial neural network. In this regard, the robot control system 200 may be configured to include a plurality of servers to perform distributed processing or may be defined with a 5G network. In this regard, the AI server may be included as a component of the logistics robot 100, such that the AI server may perform at least a portion of the AI processing as performed by the logistics robot 100 itself.

The robot control system 200 may include a communication unit 210, a memory 230, a training processor 240, a processor 260, etc.

The communication unit 210 may transmit and receive data to and from an external device such as the logistics robot 100.

The memory 230 may include a model storage 231. The model storage 231 may store therein a model (or an artificial neural network) 231a) that is being trained or has been trained through the training processor 240.

The training processor 240 may train the artificial neural network 231a using training data. The learning model may be used while being mounted on the robot control system 200 of the artificial neural network, or may be mounted on an external device such as the logistics robot 100 and may be used thereby.

The learning model may be implemented in hardware, software, or a combination of hardware and software. When an entirety or a portion of the learning model is implemented in software, one or more instructions constituting the learning model may be stored in the memory 230.

The processor 260 may infer a result value from new input data using the learning model, and generate a response or a control command based on the inferred result value.

FIGS. 4 and 5 are perspective views of the logistics robot 100 and the rolltainer 500 of the transportation means 100 and 500 according to an embodiment of the present disclosure. The logistics robot 100 of the present disclosure includes a body 101 in which components are mounted. The body 101 may move using a traveling unit 170 disposed thereunder.

The body 101 of the logistics robot 100 may be free of an area for loading an article and may have a box shape including a space in which a component is mounted, as shown in FIG. 4. Components such as the traveling unit 170, a power supply 190, and a controller 180 as a substrate assembly are mounted on and in the body 101. For stable driving, the height of the body 101 may be sized not to be greater than a width of a bottom surface of the body.

In order to secure the viewing angle of the camera 121 observing an object in front thereof, the camera 121 may be mounted on a vertical bracket 102 extending upwards from the body 101 such that a vertical level of the camera 121 may be higher, as shown in FIG. 5.

In addition, a touch screen 151 is disposed on a top of the vertical bracket 102 so that the user may identify the state information of the logistics robot 100 and control the logistics robot 100 through a touch input.

A vertical position of the touch screen 151 may be at a top level of the vertical bracket 102 in consideration of the user's eye height. The vertical bracket 102 may include a speaker 152. The speaker 152 may be positioned at a predetermined vertical level or higher, such that the sound output from the speaker 152 may be transmitted far away.

The logistics robot 100 is engaged with the rolltainer 500 with wheels to transport the article loaded on the rolltainer 500. The logistics robot 100 includes the traveling unit 170 and has enough power to tow the rolltainer 500 on which the article is loaded.

The rolltainer 500 may include a loading shelf 520 on which articles may be loaded, and may include a frame 510 formed in a grid manner to support the loading shelf 520. The frame may be disposed under the loading shelf 520 to support the weight of the article loaded on the loading shelf 520.

The rolltainer 500 may include a rolltainer wheel 540 on a bottom thereof for ease of transport.

The rolltainer 500 may include the coupling unit 530 for coupling with the logistics robot 100, and the logistics robot 100 may include the docking unit 130 coupled with the coupling unit 530 of the rolltainer 500. The engaging structure between the coupling unit 530 and the docking unit 130 should be stably maintained even when the transportation means drives on the inclination or unevenness.

As shown in FIG. 4, the docking unit 130 of the logistics robot 100 may be positioned on the upper surface of the body 101, and the coupling unit 530 of the rolltainer 500 is positioned at a front side of the rolltainer. The docking unit 130 disposed on the upper surface of the body 101 may be engaged with the coupling unit 530 disposed at the front side of the rolltainer 500.

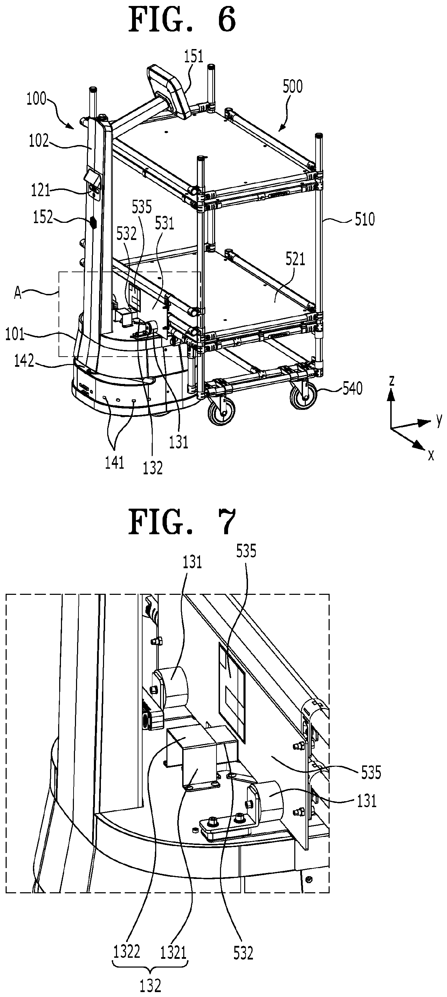

Referring to FIG. 6, when the docking unit 130 and the coupling unit 530 are engaged with each other, a portion of the body 101 may be inserted into a lower space defined in the rolltainer. Under the coupling unit 530 of the rolltainer 500, an opening through which a rear portion of the body 101 passes is defined.

In particular, the transportation means 100 and 500 of the present disclosure has an engaging structure capable of automatically engaging and disengaging the logistics robot 100 and the rolltainer 500 with and from each other without input of manpower. The logistics robot 100 may move backward such that the rolltainer 500 is positioned in rear of the logistics robot 100 and thus the coupling unit 530 of the rolltainer 500 and the docking unit 130 of the logistics robot 100 are engaged with each other.

As shown in FIG. 4, when the logistics robot 100 has been displaced so as to approach the rolltainer 500 to be towed under the operation of the front camera 121, the logistics robot 100 may rotate by 180° as shown in FIG. 5 so that the rear side thereof faces the rolltainer 500.

In this case, in order to identify the position of the coupling unit 530 of the rolltainer 500, a rear camera 138 for photographing an object in rear of the logistics robot 100 may be further included in the logistics robot. The rear camera 138 may be located on the vertical bracket 102. In order that the rear camera 138 is used for photographing only the coupling unit 530 of the rolltainer 500 instead of photographing a wide area, the position of the rear camera 138 may be close to the docking unit 130.

The rear camera 138 may be disposed adjacent to a bottom of the vertical bracket 102 and may be located at a position relatively lower than that of the front camera 121.

The coupling unit 530 of the rolltainer 100 may include an identification code 535. Thus, using the identification code 535 captured by the rear camera 138, the controller may control the position of the logistics robot 100 such that the docking unit 130 of the logistics robot 100 may be engaged with the coupling unit 530.

The identification code 535 may include an information image such as a QR code or a barcode as shown in FIG. 4 which may be used to identify the object. Not only may information on the rolltainer 500 be identified based on the identification code 535 of the rolltainer 500, but also the position of the coupling unit 530 of the rolltainer 500 may be identified based on the identification code 535 of the rolltainer 500. While the rear camera 138 identifies the position of the identification code 535, the robot moves backwards so that the coupling unit 530 and the docking unit 130 are aligned with each other.

A hooking scheme using a hook or the like has a strong engaging force. However, in this scheme, it is difficult to automatically accurately position the robot, so that there is a problem that the positioning should be performed manually. The docking unit 130 of the present disclosure may include an electromagnet 131 generating a magnetic force so that the logistics robot 100 and the rolltainer 500 may be automatically engaged or disengaged with or from each other.

The magnetic force of the electromagnet 131 may be controlled according to whether power is applied thereto. Thus, the power applied to the electromagnet 131 may be controlled such that the logistics robot 100 and the rolltainer 500 are selectively engaged or disengaged with or from each other. A general electromagnet 131 generates the magnetic force when the power is applied thereto. When the general electromagnet 131 is used, continuous power application is required in order to maintain the state in which the logistics robot 100 is coupled to the rolltainer 500.

Accordingly, in accordance with the present disclosure, a permanent electromagnet 131 may be used to maintain the engaging force while minimizing power consumption. The permanent electromagnet 131 is similar to the conventional electromagnet in that the magnetic force changes depending on whether the power is applied thereto.

However, the permanent electromagnet 131 includes a permanent magnet. When power is not applied thereto, a metallic material may be attached thereto under the the magnetic force of the permanent magnet. When the power is applied to a magnetic coil arranged side by side with the permanent magnet, the magnetic coil generates a magnetic field in an opposite direction to the direction of the magnetic field of the permanent magnet to cancel the magnetic force of the permanent magnet.

That is, the magnetic force of the permanent electromagnet 131 is removed when the power is applied thereto. The magnetic force thereof is restored when the power application thereto is stopped. The permanent electromagnet 131 may be configured such that the magnetic coil is oriented in a parallel manner to a magnetic orientation of the permanent magnet so that the magnetic field of the permanent magnet and a magnetic field generated from the magnetic coil superpose. As illustrated in FIG. 5, a metal portion 531 of the rolltainer 500 is coupled to a rear side of the permanent electromagnet 131. Thus, the permanent electromagnet 131 may include the magnetic coil as the front portion thereof and the permanent magnet as the rear portion thereof.

The coupling unit 530 of the rolltainer 500 may include the metal portion 531 disposed on the front surface of the rolltainer 500 so as to be coupled to the permanent electromagnet 131. The metal portion 531 may be formed as a plate-shaped member as shown in FIG. 5, and the metal portion 531 may have a size larger than that of the permanent electromagnet 131 such that even when a center of the metal portion and a center of the permanent electromagnet are misaligned with each other within a predetermined error range, the metal portion 531 is attached to the permanent electromagnet 131.

The permanent electromagnet 131 may be attached to the metal portion 531 on the front surface of the rolltainer 500 under the magnetic force. This may restrict the movement of the rolltainer 500 in the front-rear direction (y-axis direction). The permanent electromagnet 131 may include a pair of left and right permanent electromagnets 131 as shown in FIG. 4, thereby increasing the engaging force between the permanent electromagnet 131 and the metal portion 531 and minimizing a twist in the left-right direction.

A rear surface of the permanent electromagnet 131 may be parallel to the horizontal direction (x-axis direction) so that the front surface of the rolltainer 500 is perpendicular to the movement direction of the logistics robot 100. Only when the center of the rolltainer 500 coincides with the center of the logistics robot 100, the logistics robot 100 may stably move.

In order to align the positions in the horizontal direction (x-axis direction) of the rolltainer 500 and the logistics robot 100 with each other, the coupling unit 530 may include a coupling block 532 protruding from the front surface of the rolltainer 500, and the docking unit 130 may include a docking bracket 132 disposed between the pair of permanent electromagnets 131.

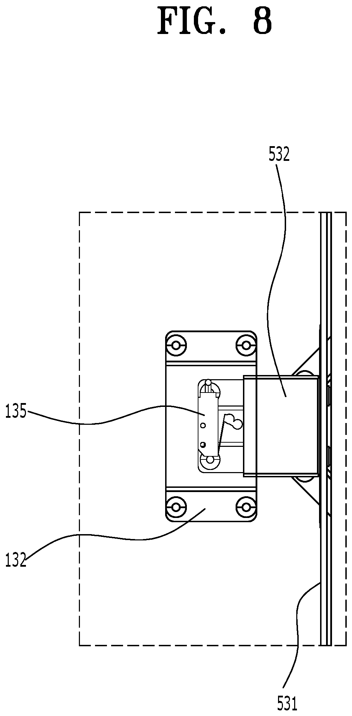

FIG. 6 is a diagram illustrating a state in which the logistics robot 100 of the transportation means 100 and 500 is engaged with the rolltainer 500 according to an embodiment of the present disclosure. FIG. 7 is an enlarged view of a portion A of FIG. 6, and FIG. 8 is a top perspective view of a state in which the logistics robot 100 of FIG. 7 is engaged with the rolltainer 500.

The coupling block 532 may protrude from the front surface of the rolltainer 500 and have a box shape. The metal portion 531 of the present embodiment has a size so as to cover all of the pair of left and right permanent electromagnets 131, and the coupling block 532 is coupled to the front surface of the metal portion 531. The metal portion 531 may be firmly fixed to the rolltainer 500.

The docking bracket 132 may have an inner space defined therein into which the box-shaped coupling block 532 may be inserted. The docking bracket 132 may include left and right sidewall portions 1321 respectively facing the left and right sides of the coupling block 532 and an upper portion 132 facing the upper side of the coupling block 532.

The left and right sidewall portions 1321 may limit the movement in the horizontal direction (x-axis direction) of the coupling block 532, and the upper portion 1322 may limit the movement in the vertical direction (z-axis direction) of the coupling block 532 such that the engaging force between the robot and the rolltainer is improved. The permanent electromagnet 131 limits the movement in the front-rear direction (y-axis direction) of the rolltainer 500. Thus, the logistics robot 100 and the rolltainer 500 may move together.

The controller 180 may control the traveling unit 170 to move backwards with reference to the identification code 535 recognized by the rear camera 138 so that the coupling block 532 is accurately coupled to the docking bracket 132.

The identification code 535 may be located on top of the coupling block 532. The logistics robot 100 moves backwards in a state in which the rear camera 138 and the identification code 535 are aligned with each other in the y-direction, such that the coupling block 532 may be inserted into the docking bracket 132.

However, when the logistics robot 100 moves backwards in a state in which the permanent electromagnet 131 is located within a predetermined distance from the metal portion 531, the metal portion 531 may be pulled toward the logistics robot 100 under the magnetic force of the permanent electromagnet 131. Thus, the permanent electromagnet 131 and the metal portion 531 may be engaged with each other before the alignment therebetween is achieved. In order to prevent this situation, in response to that the rear camera 138 detects that the identification code 535 is located within a predetermined distance therefrom, the controller 180 may apply the power to the permanent electromagnet 131 to remove the magnetic force of the permanent electromagnet 131.

An engagement sensor 135 for recognizing whether the coupling block 532 has been accurately inserted into the docking bracket 132 may be provided inside the docking bracket 132. In the present embodiment, a limit switch 135 is used as the engagement sensor. When the coupling block 532 presses the limit switch 135, the traveling unit may stop the backward movement.

In addition, when the limit switch 135 is pressed, the power applied to the permanent electromagnet 131 is cut off to restore the magnetic force of the permanent electromagnet 131, such that the permanent electromagnet 131 is engaged with the metal portion 531.

The docking unit 130 is disposed on the upper surface of the body 101 and at a front side thereof. A portion of the upper surface of the body 101 overlaps the rolltainer 500 in the vertical direction Z as shown in FIG. 6. Accordingly, the coupling unit 530 may be disposed in front of the lowermost shelf 521 of the rolltainer 500, and the lower portion of the body 101 may be received into a space under the lowermost shelf 521.

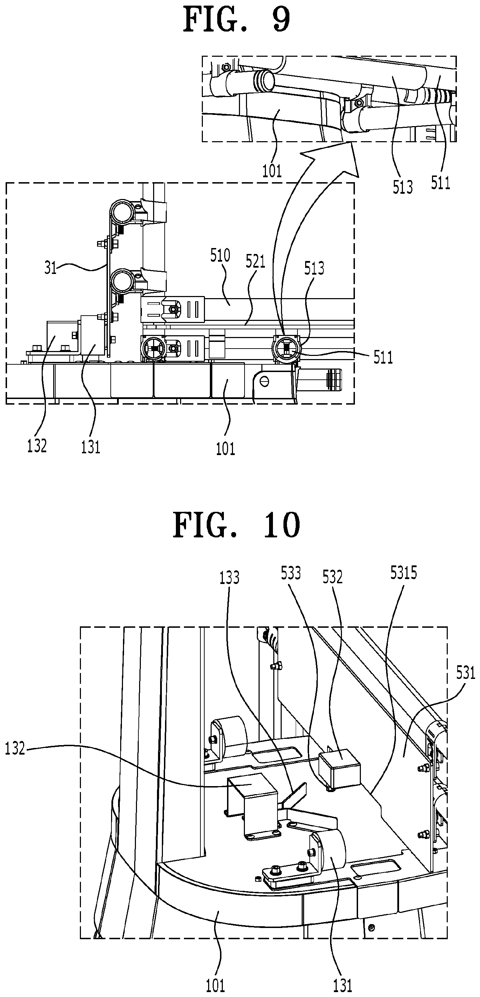

FIG. 9 is a side elevation diagram of the transportation means 100 and 500 according to an embodiment of the present disclosure. A pipe-shaped support frame 511 supporting the lowermost shelf 521 may be included in the the rolltainer 500. A lower surface of the support frame 511 may be in contact with the upper surface of the body 101 of the logistics robot 100.

While the logistics robot 100 travels in a state of being engaged with the rolltainer 500, a phenomenon in which the rolltainer 500 slips during acceleration or deceleration may occur. When the rolltainer 500 slips, the upper surface of the logistics robot 100 and the docking unit 130 may be damaged, and the rolltainer 500 may be tilted and turned over. In order to prevent such an accident, a lower surface of the lowermost shelf 521 of the rolltainer 500 in contact with the upper surface of the logistics robot 100 may be provided with a cart stopper 513 for preventing the slippage.

The cart stopper 513 of the present embodiment may include an elastic rubber surrounding a lower portion of the support frame 511 disposed on a bottom of the lowermost shelf 521. The cart stopper 513 may be in close contact with the upper surface of the logistics robot 100 to increase the coupling force between the rolltainer 500 and the logistics robot 100.

In addition, the cart stopper 513 including the elastic rubber may have elasticity to absorb the impact applied to the upper surface of the body 101 of the logistics robot 100 when the logistics robot is driving on the unevenness or the protrusion on the driving path, thereby preventing the logistics robot 100 from being damaged.

When the positions of the docking unit of the robot and the coupling unit of the rolltainer are aligned with each other using the above-described rear camera 138, the controller may control the position of the robot in a software manner using the image information, so that accurate engaging therebetween is made. However, there is a disadvantage in that it is necessary to detect proximity of the robot to the rolltainer and apply the power to the permanent electromagnet 131, and the alignment of the positions of the docking unit 130 and the coupling unit 530a requires a calculation process in the controller 130 or the server 200, so that it takes a time to engage the logistics robot 100 and the rolltainer 500 with each other.

Thus, when a guide structure for guiding the physical engagement between the coupling block 532 and the docking bracket 132 is provided, the docking unit 130 and the coupling unit 530 may be engaged with each other within a shorter time.

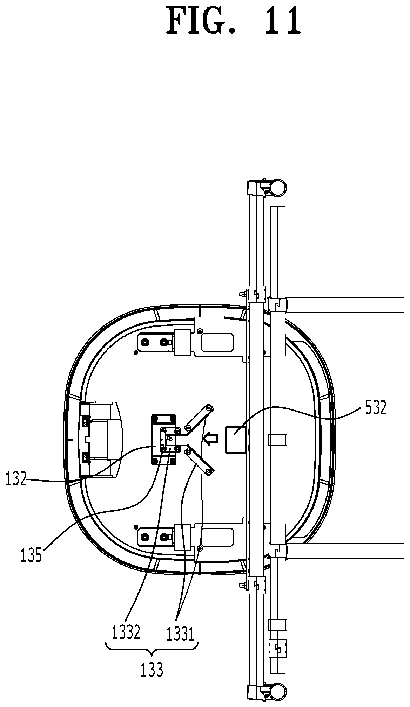

FIGS. 10 and 11 are diagrams illustrating a process in which the logistics robot 100 is engaged with the rolltainer 500 in the transportation means 100 and 500 according to another embodiment of the present disclosure.

The docking unit 130 of the present embodiment may further include a guide bracket 133 that physically guides a process in which the coupling block 532 is engaged with the docking bracket 132. The guide bracket 133 includes a flared portion 1331 including a pair of sidewall structures extending such that a spacing therebetween is increased as the flared portion extends in a rearward direction. The spacing between the sidewall structures of the flared portion is decreased as the flared portion extends in a frontward direction. Thus, the movement of the logistics robot 100 and the rolltainer 500 may be guided to the engaged position through the flared portion.

The guide bracket 133 extends rearwards from the docking bracket 132 as illustrated in FIG. 11. Thus, when the coupling block 532 has been engaged with the docking bracket 132, the guide bracket 133 is positioned in rear of the coupling block 532.

When the left and right portions of the coupling block 532 of the metal portion 531 are removed so that the coupling block 532 can pass through the guide bracket 13, the rigidity of the coupling block 532 is lowered, and the metal portion 531 to which the coupling block 532 is coupled may be bent.

Accordingly, in the present embodiment, in order that the portion in the lateral direction of the coupling block 532 is not removed, the vertical level of the guide bracket 133 may be lower than a vertical level of the coupling block 532, and the engaging between the rolltainer 500 and the logistics robot 100 may be guided using a guide protrusion 533 protruding downward from a bottom of the coupling block 532.

As shown in FIG. 11, the guide bracket 133 may include a straight portion 1332 as a front portion thereof so that the guide protrusion 533 is positioned at a corrected position, and may include the flared portion 1331 extending from the straight portion 1332 in the rearward direction and having the sidewalls extending such that the spacing therebetween is increased as the sidewalls extend in the rearward direction. The guide bracket 133 may be formed in a Y shape in the plan view. The straight portion 1332 may be located under the docking bracket 132.

In the process in which the logistics robot 100 approaches the rolltainer 500, when there is no rear camera, the docking bracket 132 and the coupling block 532 may not be aligned with each other. However, when the guide protrusion 533 is positioned between the side structures of the flared portion 1331 of the guide bracket 133, the guide protrusion may be received into a groove defined in the straight portion 1332 while being guided to move along the flared portion 1331 of the guide bracket 133. When the guide protrusion 533 is received into the groove defined in the straight portion 1332, the logistics robot 100 and the rolltainer 500 may be aligned with each other so that the coupling block 532 can be inserted into the docking bracket 132.

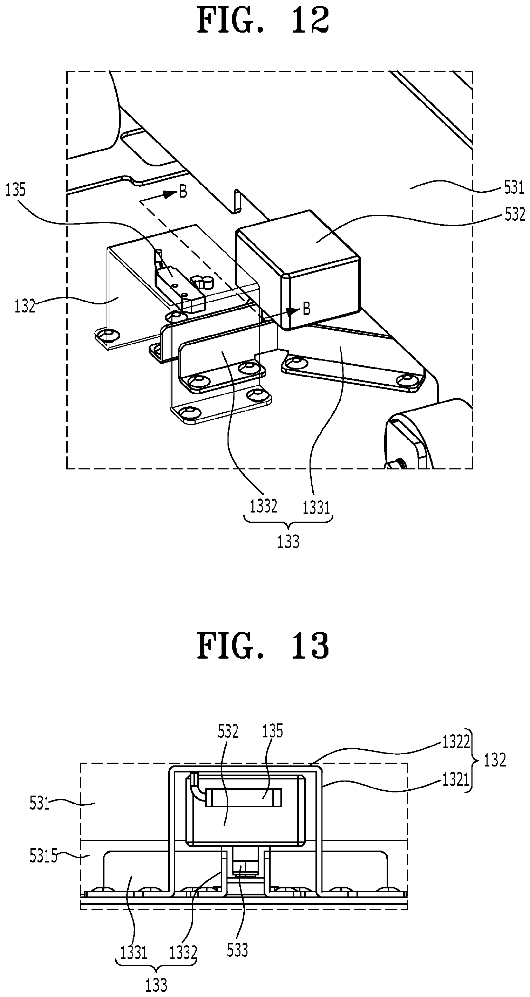

FIG. 12 is a perspective view showing a state in which the logistics robot 100 is engaged with the rolltainer 500 in the transportation means 100 and 500 according to another embodiment of the present disclosure, and FIG. 13 is a B-B cross-sectional view of FIG. 12.

In a state in which the coupling block 532 has been inserted into the docking bracket 132, the guide protrusion 533 is located in the groove defined in the straight portion 1332 of the guide bracket 133, and the coupling block 532 presses (turns on) the limit switch 135 as the engagement sensor 135 located in the docking bracket 132 such that the backward movement of the logistics robot 100 is stopped.

Unlike the above-described embodiment, even when the permanent electromagnet 131 pulls the metal portion 531 of the rolltainer 500 under the magnetic force, the guide protrusion 533 and the guide bracket 133 may be aligned with each other. Thus, there is no need to remove the magnetic force of the permanent electromagnet 131. Rather, when the rolltainer 500 is pulled under the magnetic force of the permanent electromagnet 131, the faster engaging between the robot and the rolltainer may be established.

Referring to FIG. 10, the metal portion 531 may be formed as a wide plate-shaped member engaged with the left and right permanent magnets 131. The coupling unit 530 may include the metal portion 531 and the coupling block 532 disposed on the metal portion 531. The metal portion 531 may be fastened to the frame 511 of the rolltainer 500 such that the coupling unit 530 maty be easily mounted on the rolltainer 500.

The metal portion 531 supports the load applied to the coupling block 532 in the acceleration/deceleration of the logistics robot 100 or when the logistics robot 100 travels on the inclined driving path, so that the coupling block 532 may be prevented from being disengaged from the rolltainer 500 or being damaged. The metal portion 531 may have an opening 5315 defined therein and under the coupling block 532 as illustrated in FIG. 10 such that when the coupling unit 530 and the docking unit 130 are engaged with each other, a portion of the flared portion of the guide bracket 133 passes through the opening 5315 and then is positioned in rear of the coupling block 532.

The metal portion 531 may be constructed such that a step is formed between a lower end of a central portion the metal portion 531 to which the coupling block 532 is coupled and each of both opposing side portions thereof to which each of the permanent electromagnets 131 is coupled, such that the opening 5315 may be defined therein. In order that the step is not formed, the permanent electromagnet 131 may be disposed to be spaced upwardly from the upper surface of the body 101. However, in order for the bracket fixing the permanent electromagnet 131 to stably support the load of the rolltainer 500, it is advantageous for the permanent electromagnet 131 to be adjacent to the upper surface of the body 101 of the logistics robot 100. Accordingly, as shown in FIG. 10, the step is formed at the lower end of the metal portion 531 to implement the opening 5315.

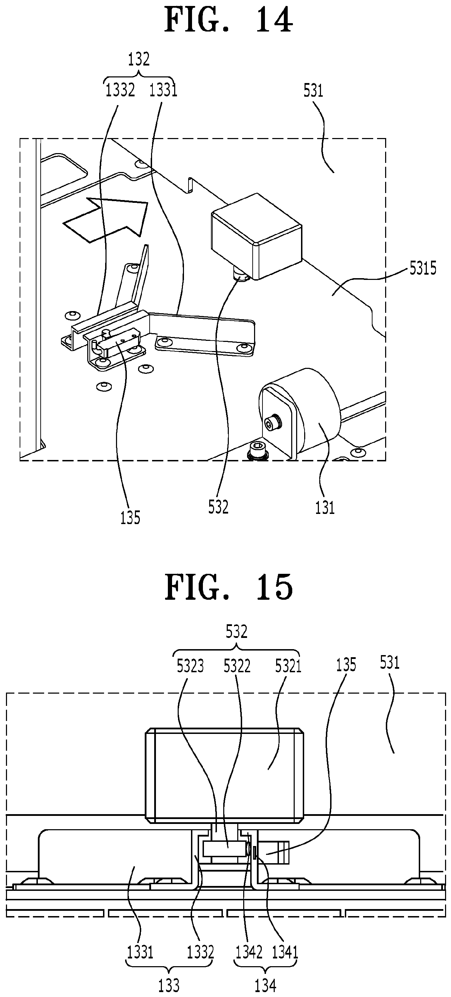

FIGS. 14 and 15 are diagrams showing the engaging structure of the transportation means 100 and 500 according to another embodiment of the present disclosure. The present embodiment is an embodiment in which a docking bracket 134 and the guide bracket 133 are integrated with each other.

The docking bracket 132 of the above-described embodiment is separately provided from the guide bracket so as to cover an upper portion of the straight portion 1332 of the guide bracket 133. However, in the present embodiment, an upper surface portion 1342 extending from the upper end of the straight portion 1332 of the guide bracket 133 may be formed such that the straight portion 1332 including the upper surface portion 1342 may act as the docking bracket 134, as shown in FIG. 15.

The coupling block 532 may include a first block 5321 attached to the front surface of the rolltainer 500, a second block 5322 disposed under the first block 5321, and a connection portion 5323 connecting the first block 5321 and the second block 5322 to each other. The upper surface portion 1342 of the docking bracket 134 of the present embodiment has a slit defined therethrough so that the connection portion 5323 may pass through the slit.

As illustrated in FIG. 15, a width of the connection portion 5323 may be sized to be smaller than a width of the second block 5322 such that the second block 5322 is stopped by the upper surface portion 1342 of the docking bracket 134. The second block 5322 and the connection portion 5323 of the present embodiment limit the movement of the rolltainer 500 in the horizontal direction (x-axis direction, FIG. 6) and the vertical direction (z-axis direction, FIG. 6) so that the rolltainer 500 may be stably coupled to the logistics robot 100.

The second block 5322 of the present embodiment may act as a stopper structure that restricts the horizontal and vertical movement of the rolltainer 500, and may also serve as a guide block 133 moving along the guide bracket 133 so that the coupling block of the rolltainer 500 is inserted into the docking bracket 134.

FIG. 15 shows another example of a position of the engagement sensor 135. The engagement sensor 135 of the present embodiment is disposed on a sidewall portion 1341 of the docking bracket 134 so that the engagement sensor 135 may detect that the second block 5322 is inserted into the docking bracket 134.

Although not shown in FIG. 14, as shown in FIG. 12, the docking bracket 132 surrounding the first block 5321 of the coupling block 532 may be included in addition to the docking bracket 134.

Thus, the first docking bracket 132 surrounding the first block 5321 and the second docking bracket 134 surrounding the second block 5322 as formed by modifying the straight portion 1332 of the guide bracket 133 may be included in the docking unit of the robot. In this case, the pair of docking brackets 134 may be engaged with the coupling block 532, thereby improving the engaging force.

As described above, the docking unit 130 of the logistics robot 100 according to the present disclosure may be engaged with the coupling unit 530 of the rolltainer 500 at an accurate position, such that the robot 100 may be automatically connected to the rolltainer 500 without manual work.

In addition, the permanent electromagnet 131 may lose the magnetic force when the power is applied thereto. Thus, only in order that the docking unit of the robot 100 is disengaged from the coupling unit 530 of the rolltainer 500, the logistics robot 100 of the present disclosure may apply the power to the permanent electromagnet 131, such that the power consumption is reduced and the detachment of the robot from the rolltainer is easy.

In addition, the docking bracket 134 may limit the horizontal and vertical movements of the coupling unit 530 of the rolltainer 500 to prevent shaking, slippage, and the like while the transportation mean is driving.

In addition, the slippage prevention means may prevent the phenomenon in which the rolltainer 500 slips due to inertia when the transportation mean is traveling on the inclined road or the protrusion or when the logistics robot 100 is accelerated or decelerated.

The above detailed description is not to be construed as limiting in any respect and should be considered exemplary. The scope of the disclosure is to be determined by a reasonable interpretation of the appended claims, and all changes within the equivalents of the disclosure are included in the scope of the disclosure.

## Claims

1. A logistics robot engaged with a rolltainer to tow the rolltainer, wherein the rolltainer includes a metal portion and a coupling block at a front surface thereof, wherein the logistics robot comprises:
a body;
a traveling unit disposed under the body; and
a docking unit disposed on the body and engaged with the metal portion and the coupling block of the rolltainer,
wherein the docking unit includes:
an electromagnet having magnetism varying depending on whether power is applied thereto, wherein the metal portion is selectively attached to the electromagnet based on the varying magnetism; and
a docking bracket disposed adjacent to the electromagnet, wherein the coupling block is inserted into the docking bracket,
wherein the docking bracket includes a pair of sidewall portions respectively covering left and right sides of the coupling block and an upper surface portion covering an upper portion of the coupling block.

2. The logistics robot of claim 1, wherein the electromagnet includes a permanent electromagnet including a magnetic coil and a permanent magnet,
wherein in response to that power is applied to the magnetic coil, a magnetic field in a direction opposite to a direction of a magnetic field of the permanent magnet is generated, so that a total magnetic force of the permanent electromagnet including is reduced.

3. The logistics robot of claim 2, wherein the logistics robot further comprises a controller configured to apply the power to the magnetic coil such that the docking unit is disengaged from the rolltainer.

4. The logistics robot of claim 1, wherein the electromagnet faces a rear surface of the body and includes a pair of right and left electromagnets arranged in a horizontal direction of the docking bracket.

5. The logistics robot of claim 1, wherein the logistics robot further comprises:
a vertical bracket protruding upwards from the body;
a rear camera disposed on the vertical bracket and facing in a rearward direction, wherein the rear camera is configured to recognize an identification code disposed on the rolltainer; and
a controller configured to control the traveling unit such that the coupling block is inserted into the docking bracket, based on a position of the identification code recognized by the rear camera.

6. The logistics robot of claim 5, wherein in response to that the position of the identification code is located within a specified distance from the robot, the controller is configured to control the power application to the electromagnet to remove the magnetic force of the electromagnet.

7. The logistics robot of claim 6, wherein the logistics robot further comprises an engagement sensor configured to detect whether the coupling block of the rolltainer is inserted into the docking bracket,
wherein in response to that the engagement sensor is turned on, the controller is configured to control the power application to the electromagnet to restore the magnetic force of the electromagnet.

8. The logistics robot of claim 1, wherein the docking unit includes a guide bracket having left and right portions respectively disposed on left and right sides of a guide protrusion protruding downwardly from the coupling block, wherein a spacing between the left and right portions is increased as the guide bracket extends in a rearward direction.

9. The logistics robot of claim 8, wherein a vertical level of the guide bracket is lower than a vertical level of the coupling block.

10. The logistics robot of claim 8, wherein a front portion of the guide bracket includes a straight portion disposed under the docking bracket,
wherein the logistics robot further comprises an engagement sensor for detecting whether the guide protrusion is received in a groove defined in the straight portion.

11. The logistics robot of claim 1, wherein the coupling block includes:
a first block having a rear side coupled to the rolltainer;
a second block disposed under the first block; and
a connection portion connecting the first block and the second block to each other,
wherein the sidewall portions of the docking bracket are respectively disposed on both opposing sides of the second block,
wherein the upper surface portion of the docking bracket has an opening defined therethrough at a position corresponding to a position of the connection portion.

12. The logistics robot of claim 11, wherein the docking unit includes a guide bracket having two portions respectively extending rearwardly from the pair of sidewall portions of the docking bracket, wherein a spacing between the two portions is increased as the guide bracket extends in a rearward direction.

13. A transportation means comprising:
a rolltainer including a metal portion and a coupling block disposed at a front surface thereof; and
a logistics robot including a body, a traveling unit disposed under the body, and a docking unit disposed on the body and engaged with the metal portion and the coupling block,
wherein the docking unit includes:
an electromagnet having magnetism varying depending on whether power is applied thereto, wherein the metal portion is selectively attached to the electromagnet based on the varying magnetism; and
a docking bracket, wherein the coupling block is inserted into the docking bracket,
wherein the docking bracket includes a pair of sidewall portions respectively covering left and right sides of the coupling block and an upper surface portion covering an upper portion of the coupling block.

14. The transportation means of claim 13, wherein the electromagnet includes a permanent electromagnet including a magnetic coil and a permanent magnet,
wherein in response to that power is applied to the magnetic coil, a magnetic field in a direction opposite to a direction of a magnetic field of the permanent magnet is generated, so that a total magnetic force of the permanent electromagnet including is reduced,
wherein the logistics robot further comprises a controller configured to apply the power to the magnetic coil such that the docking unit is disengaged from the rolltainer.

15. The transportation means of claim 13, wherein the logistics robot further comprises:
a vertical bracket protruding upwards from the body;
a rear camera disposed on the vertical bracket and facing in a rearward direction, wherein the rear camera is configured to recognize an identification code disposed on the rolltainer; and
a controller configured to control the traveling unit such that the coupling block is inserted into the docking bracket, based on a position of the identification code recognized by the rear camera.

16. The transportation means of claim 15, wherein in response to that the position of the identification code is located within a specified distance from the robot, the controller is configured to apply the power to the electromagnet to remove the magnetic force of the electromagnet,
wherein in response to that the coupling block of the rolltainer has been inserted into the docking bracket, the controller is configured to stop the power application to the electromagnet to restore the magnetic force of the electromagnet.

17. The transportation means of claim 13, wherein the coupling block includes a guide protrusion fixed to a front surface of the metal portion and protruding downwards from the coupling block,
wherein the metal portion has an opening defined therethrough and disposed under the coupling block, wherein the ponding has a predetermined width,
wherein the docking unit includes a guide bracket having left and right portions respectively disposed on left and right sides of the guide protrusion, wherein a spacing between the left and right portions is increased as the guide bracket extends in a rearward direction,
wherein when the coupling block and the docking bracket are engaged with each other, the guide bracket passes through the opening.

18. The transportation means of claim 13, wherein the coupling block includes:
a first block having a rear side coupled to the rolltainer;
a second block disposed under the first block; and
a connection portion connecting the first block and the second block to each other,
wherein the sidewall portions of the docking bracket are respectively disposed on both opposing sides of the second block,
wherein the upper surface portion of the docking bracket has an opening defined therethrough at a position corresponding to a position of the connection portion,
wherein the docking unit includes a guide bracket having two portions respectively extending rearwardly from the pair of sidewall portions of the docking bracket, wherein a spacing between the two portions is increased as the guide bracket extends in a rearward direction.

19. The transportation means of claim 13, wherein the rolltainer includes:
a lowest loading shelf, wherein the coupling block and the metal portion are disposed on a front surface of the lowest loading shelf; and
a cart stopper disposed on a bottom surface of the lowest loading shelf,
wherein the docking bracket is disposed on a front area of an upper surface of the body,
wherein a portion of the body is received in a space under the lowest loading shelf when the coupling block has been inserted into the docking bracket,
wherein the cart stopper is in contact with the upper surface of the body when the coupling block has been inserted into the docking bracket.

20. The transportation means of claim 19, wherein the cart stopper includes an elastic portion surrounding a support frame disposed on the bottom surface of the lowest loading shelf.
